# EUROPEAN PATENT SPECIFICATION

(11) **EP 3 417 338 B1**
(45) Date of publication and mention of the grant of the patent: **25.09.2024**
(21) Application number: 17753591.1
(22) Date of filing: 15.02.2017
(51) Int. Cl.: G02B 27/01, G02C 9/00

(54) **MODULAR ADD-ON AUGMENTED REALITY HEAD-UP DISPLAY, INTERFACES AND CONTROLS**
MODULARES ZUSÄTZLICHES HEAD-UP-DISPLAY FÜR ERWEITERTE REALITÄT, SCHNITTSTELLEN UND STEUERUNGEN
AFFICHAGE TÊTE HAUTE À RÉALITÉ AUGMENTÉE COMPLÉMENTAIRE MODULAIRE, INTERFACES ET COMMANDES

(30) Priority: 15.02.2016 SG 10201601087R
(43) Date of publication of application: 26.12.2018
(73) Proprietor: Advanced Material Engineering Pte Ltd, Singapore 619523 (SG)
(72) Inventor: YAP, De Tao, Francis, Singapore 6000265 (SG); CHUA, Yao Wei, Alfred, Singapore 750338 (SG); CHENG, Man Yun, Michelle, Singapore 792413 (SG); HO, Fook Heng, Singapore 018979 (SG); AW, Cheng Hok, Singapore 387902 (SG)
(74) Representative: De Pablos Riba, Juan Ramon
(86) International application number: PCT/SG2017/050066
(87) International publication number: WO 2017/142480

(56) References cited:
- WO-A1-2014/201213
- WO-A1-2014/201213
- WO-A2-99/05580
- CN-U- 204 631 355
- US-A1- 2008 027 590
- US-A1- 2011 239 354
- US-A1- 2012 212 499
- US-A1- 2013 086 722
- US-A1- 2013 086 722
- US-A1- 2014 063 055
- US-A1- 2014 139 407
- US-A1- 2014 139 407
- US-A1- 2014 218 269
- US-A1- 2014 218 269
- US-A1- 2014 327 962
- US-A1- 2014 327 962
- US-A1- 2014 373 423
- US-A1- 2014 373 423
- US-A1- 2015 002 391
- US-A1- 2015 177 521
- MOVIECLIPS: "The Divergent Series: Allegiant (2016) - Drone Fight Scene (7/10) | Movieclips", YOUTUBE, 18 March 2016 (2016-03-18), pages 1 - 1, XP054980240, Retrieved from the Internet <URL:https://www.youtube.com/watch?v=6O_dprt5rts> [retrieved on 20200219]
- RICHARD GRAY: "Chinese Army trains students to control machines with their minds | Daily Mail Online", 12 August 2015 (2015-08-12), XP055670074, Retrieved from the Internet <URL:https://www.dailymail.co.uk/sciencetech/article-3194042/Rise-brain-controlled-robot-ARMIES-Chinese-military-trains-students-control-machines-minds.html> [retrieved on 20200219]

## Description

### Field of Invention

The present invention relates to a modular add-on augmented reality (AR) head-up display system, associated user interfaces and controls, as e.g. described in document US 2014/139407. The user interfaces are intuitive and they add on augmented reality functionalities to a host eyewear (including protective spectacles used by law enforcement, military or rescue personnel, prescription and non-prescription spectacles) and helmet mounted AR spectacles.

### Background

A wearable head-up display typically includes a near-eye display or projection member, which is often mounted on a temple piece of an eyewear and displays an image that is visible to the user at an oblique angle whilst the user sees real objects straight through the eye-pieces. These heads-up display systems are useful for mission-critical or time-critical situations in which personnel are provided with or interact with intuitive augmented information about the surrounding so as to allow the personnel to make quick and accurate decisions. Such augmented information is transmitted via intuitive user interfaces (UIs), which minimise cognitive loads when making decisions, sending/receiving information and communicating amongst the personnel in the field, between the personnel and their equipment and/or between the personnel and a remote command centre.

These heads-up display systems are useful for mission-critical or time-critical tasks because the personnel are constantly on the look out and stay vigilant whilst augmented information is made available at an angle to the line of sight, and their hands are always ready on their equipment for action (in so-called heads-up, eyes-out and hands-on trigger concepts). These systems are useful if the systems can be adapted for use with prescription glasses, non-prescription glasses, protective eyewear used by enforcement or rescue personnel, helmet mounted eyewear or safety goggle (ie. host eyewear). Often, the near-eye display or projection member is fixed onto the eyewear and this may obstruct the vision of the user. Also, this eyewear is often not foldable.

It can thus be seen that there exists a need to provide a modular add-on head-up augmented reality functionalities to an eyewear of a host. Preferably, this modular add-on is foldable and the near-eye display or projection member is movable to an unobstructed view position during mission-critical, time-critical or safety-critical situations; these heads-up AR display systems are designed for ease of use and to augment productivity and efficiency during training or work.

### Summary

The following presents a simplified summary to provide a basic understanding of the present invention. This summary is not an extensive overview of the invention, and is not intended to identify key features of the invention. Rather, it is to present some of the inventive concepts of this invention in a generalised form as a prelude to the detailed description that is to follow.

The present invention seeks to provide a modular head-up augmented reality (AR) display system to add-on to a host spectacle or an AR spectacle for mounting onto a helmet. Modules of the AR display system are for removeable attachment onto the host spectacle/helmet, and for extending functionalities of the host spectacle, which include multi-modal controls of forward equipment deployed ahead of the user.

In one embodiment, the present invention provides a modular augmented reality head-up display system as defined in claims 1-17.

In another embodiment, the present invention provides a modular augmented reality head-up display kit as defined in claims 18 and 19.

In yet another embodiment, the present invention provides a realtime control system for an unmanned vehicle as defined in claim 18, and an alternative autonomous control system as defined in claims 21-23.

### Brief Description of the Drawings

This invention will be described by way of non-limiting embodiments of the present invention, with reference to the accompanying drawings, in which:

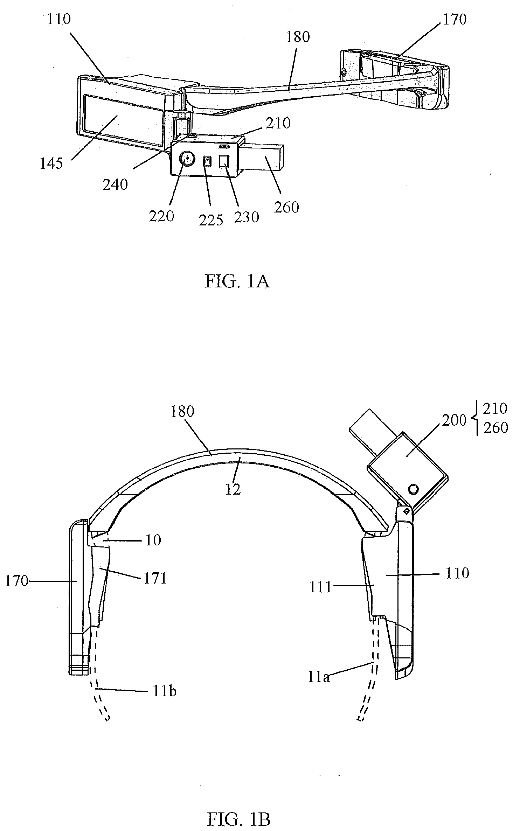

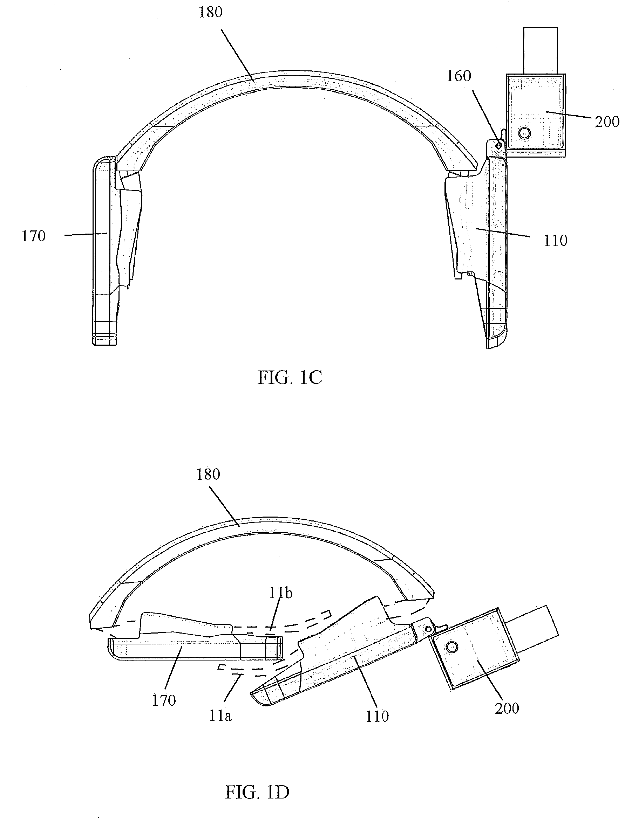

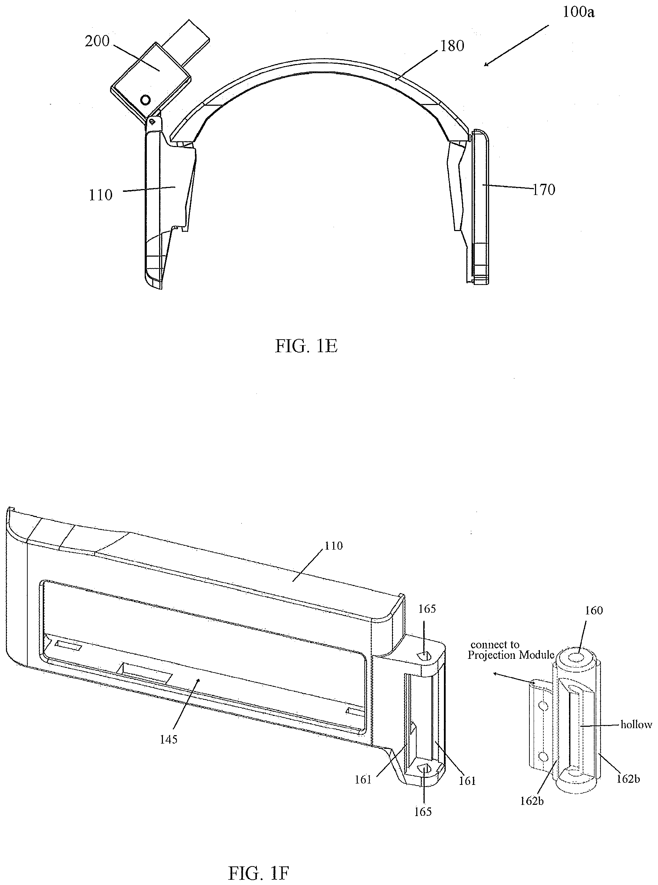

FIG. 1A illustrates a perspective view of a right-handed modular augmented reality (AR) head-up display system according to an embodiment of the present invention, whilst FIG. 1B shows a plan view; FIG. 1C illustrates the modular AR head-up display system in which the display or projection member is pivoted to an unobstructed view position, and FIG. 1D illustrates the system being folded up; FIG. IE illustrates a left-handed configuration of the modular AR head-up display system; and FIG. 1F illustrates a drop-in slot connector for pivoted connection of a display or projection module on a processor module.
FIGs. 2A-2D illustrate a head-up display system mounted on a helmet;
FIG. 3 illustrates various functionalities of the modular AR head-up display system; and
FIG. 4A illustrates an AR view seen through the above modular AR head-up display system, whilst FIGs. 4B-4E illustrate other user interfaces of the AR view.

### Detailed Description

One or more specific and alternative embodiments of the present invention will now be described with reference to the attached drawings. It shall be apparent to one skilled in the art, however, that this invention may be practised without such specific details. Some of the details may not be described at length so as not to obscure the present invention.

FIG. 1A shows a perspective view of a modular head-up display system **100** for removeable attachment onto an eyewear or spectacle **10** of a host. Preferably, the host spectacle **10** is a type of ballistic protection spectacle, safety goggle, non-prescription spectacle and/or a prescription spectacle. The modular head-up display system **100** includes a processor module **110,** a battery module **170** and a trunking module **180.** The processor and battery modules are attachable onto separate temple pieces **11a, 11b** of the host spectacle **10** whilst the trunking module **180** is attachable onto a front frame member **12** of the spectacle. When assembled onto the spectacle, the trunking member is located between the processor and battery modules, thereby protecting wires **190** between the battery and processor modules. The battery and processor modules are configured for a right-hand or left-hand user depending on the user and an inside face of each module has a hook **111, 171** for removeable snapping-on onto the respective temple piece **11a, 11b;** FIG. IE shows a plan view of the left-handed configuration **100a** of the modular AR head-up display system. Weights of the battery and processor modules are distributed and balanced to maintain comfortable wearing of the host spectacle.

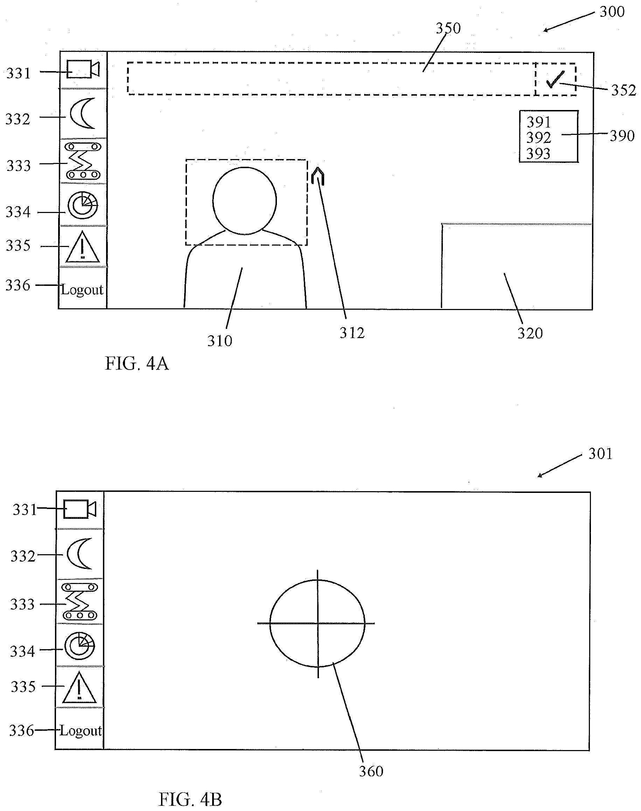

The processor module **110** includes an electronic processing unit **115,** a wireless communication unit **120,** a barometer **125,** a pedometer **130,** a nine-axis inertia measuring unit (IMU) **135,** a GPS unit **140,** a touch pad **145** and some select buttons **150.** At a forward distal end of the processor module **110** is a drop-in slot connector **160,** which allows pivotable connection with a display or projection module **200.** The projection module **200** includes a body member **210** and a transparent prism member **260.** The body member **210** houses a micro-display unit **215,** a camera/video unit **220,** a light sensor **225** and a thermal camera **230.** In low light conditions, the camera unit **220** and the thermal camera **230** are both activated, and an image fusion algorithm 232 corrects the outputs of both the camera unit and thermal camera, and provides thermal images with defined outlines to assist the user with night vision; with these thermal images, the user **30** can better identify targets or objects of interest (OoI) **310;** this night vision function can be activated by toggling on a night vision button **332,** as seen in FIG. 4A. In addition, some buttons **240,** 240a (such as on/off or select buttons) are provided on an upper face of the body member **210.** The transparent prism member **260** has an internal reflection surface on which an image projected from the micro-display unit **215** is formed and is visible to the user **30** by side glancing. FIG. 1B shows a plan view of the head-up display system shown in FIG. 1A, whilst FIG. 1C shows the projection module **200** is moved to an unobstructed position, and FIG. 1D shows the head-up display system with the temple pieces **11a, 11b** of the spectacle being folded-up. In use, the modular head-up display system **100** may wireless connect to a third party support devices, such as, a laser finder **101,** an acoustic targeting system (ATS) **102** and forward equipment **103** (such as, an unmanned ground vehicle (UGV) **103a,** an unmanned aerial vehicle (UAV) or drone **103b,** and an unmanned underwater vehicle (UUV) **103c.** In another embodiment, such as that for helmet mounting, the barometer, pedometer, IMU, and so on, may be housed in a separate unit, which is wearable on the user's clothing. In other embodiments, the touch pad **145** can be configured as a tactile track point.

The modular heads-up display system **100** also includes user interfaces that allow augmented reality information to be provided to the user intuitively (ie. a head-up concept). In other words, during mission-critical, time-critical, or safety-critical moments, augmented information about the surrounding is provided to the user **30** and/or users/peers **32** to allow them to make critical decisions quickly and accurately whilst the user(s) is/are in the frontline (ie. with eyes-out and hands-on trigger concepts). The electronic components in the processor module **110** respond equally quickly and automatically to support these mission-critical, time-critical or safety-critical moments. When the user is in a less pressing moment that the user is able to use the touch pad/track point **145** and select buttons **150** to input data, such as, using **1101** the laser finder **101,** using the forward equipment **103,** taking **1220** photos/videos with the camera/video unit **220,** tagging **1312** objects of interest (OoI) **310** on the photos, navigating the GPS map, sending **1380** information to other users/peers **32** and command centre **20,** and so on. These intuitive user interfaces help to minimize cognitive load on the users **30** so that they can concentrate on mission-critical, time-critical or safety-critical decision making. Thus, with this heads-up display system 100, the user 30 decision making and task effectiveness and efficiency is enhanced.

FIG. 1F shows the drop-in slot connector **160** which allows the projection module **200** to click or detent lock in the extended position (in the AR view) or in the retracted position (in the full reality view) until the projection module **200** is moved by the user. The click or detent lock mechanism is provided by two grooves **161** on the processor module **110** and two cooperating projections **162a, 162b** on the drop-in slot connector **160.** The drop-in slot connector is hollow and allows electrical connection between the processor and display/projection modules. The drop-in slot connector **160** is held in the processor module **110** by two pins **165** as can be visualized in FIG. 1F.

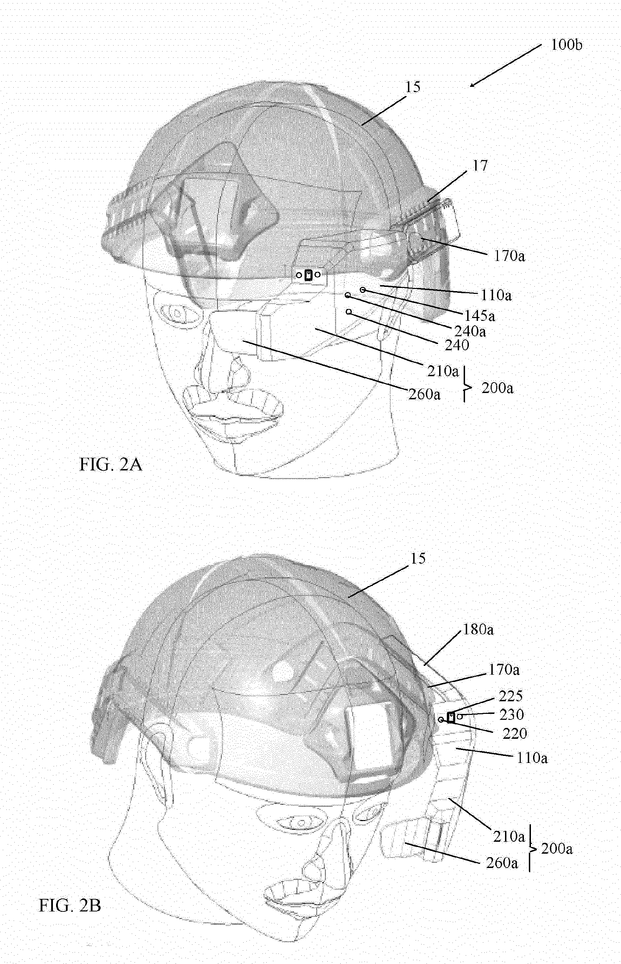

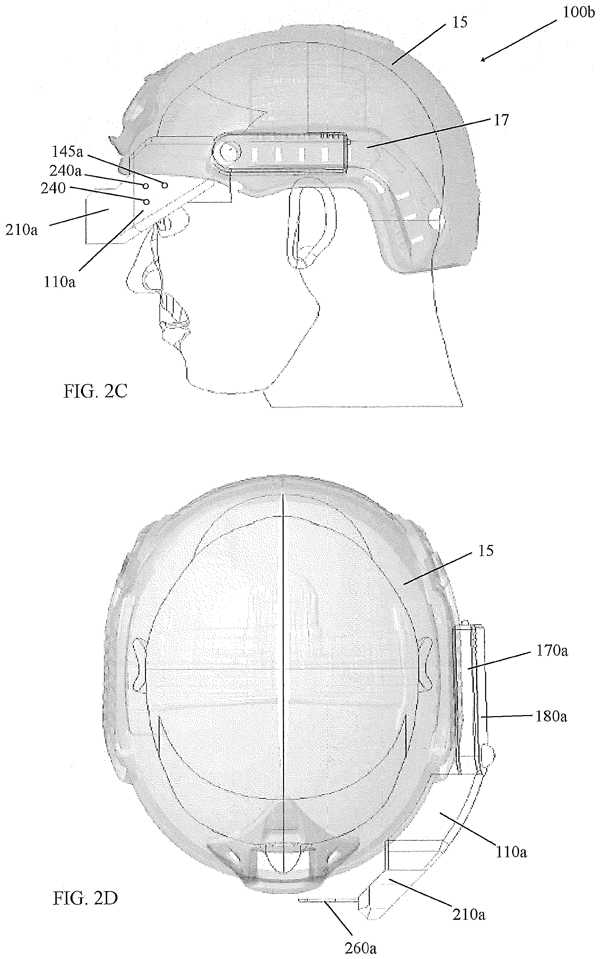

FIGs. 2A-2D show various views of a modular head-up AR display system **100b** that is mountable on a helmet **15.** As shown in FIGs. 2A-2D, the modular head-up display system **100b** is made up of a battery module **170a** mounted on a Picatinny rail **17.** A trunking module **180a** connects the battery module **170a** to a processor module **110a,** which distal end supports a body **210a** of a projection module **200a,** such that a see-through prism **260a** is proximate to the eye of the user **30.** The Picatinny rail **17** allows the AR display system **100b** to be mounted or dismounted with ease. In FIGs. 2A-2D, the AR display system **100b** is shown for left-hand mounting on the helmet **15;** this AR display system can also be configured for mounting on the right hand side of a helmet. The functions and components of the processor module **110a,** trunking module **180a** and battery module **170a** are similar to those described above; for eg., on the processor module, there are: a tactile track point **145a,** an on/off button **240,** a select button **240a,** and so on. On the projection body **210a,** there are: a camera/video unit **220a,** a light sensor **225a** and a thermal sensor **230a.**

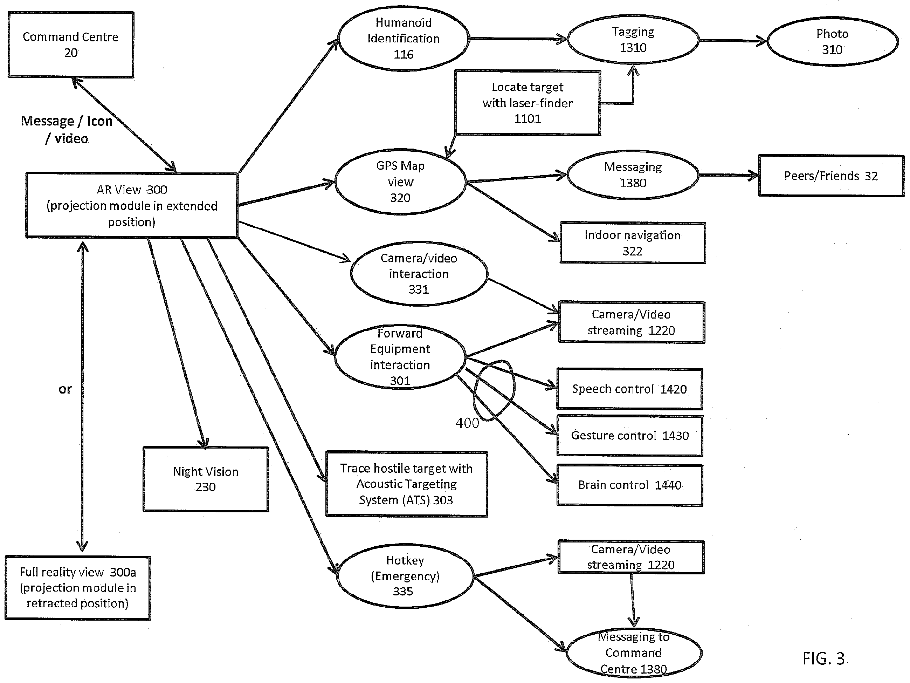

FIG. 3 shows various functionalities of the above modular heads-up display system **100, 100a,100b** whilst FIGs. 4A-4E show various view modes **300, 301, 302, 303, 304** of the user interfaces. A default AR view mode **300** allows the user to see-through the spectacle **10** for identifying OoI **310** (ie. reality view **300a**) and be provided with AR information. As seen in FIG. 4A, with the camera **220** set in video taking as the default mode, video is presented near the centre of the AR view where a man-identification algorithm **116** in the electronic processing unit **115** is provided to identify and to mark/highlight **1310** a human face **310** in the video. Automatic marking of a human face in the frontline vision helps to locate a target or to warn the user of a potential threat. The human feature identified in the video can also be tagged, for eg, with an icon **312** and may be additionally distinguished as a friend/peer **32** or foe **34.** The tagging functionality may be supported by a tagging algorithm **118** disposed inside the processor unit **110.** At the same time, a bottom right side of the AR view is a minimized GPS map **320** view of the surrounding. The position of the human feature or any OoI **310** can be planted on the GPS map **320** by firing a laser finder **101** at the target and obtaining estimates of distance and location coordinates from the user position. Preferably, the minimized GPS map view occupies about 25% of the entire AR view. On the left hand edge of the AR view, there are 6 view mode buttons/icons **331, 332, 333, 334, 335, 336,** respectively for activating the camera/video unit **220,** activating the thermal camera **230,** activating a forward equipment **103** (such as controlling a turret or camera of an unmanned vehicle, including an UGV (unmanned ground vehicle) **103a,** UAV (unmanned aerial vehicle) or drone **103b** or UUV (unmanned underwater vehicle) **103c**), interfacing with third party support devices **101, 102,** activating an emergency hotkey **335** to communicate with the command centre **20** and logging out **1336** of the AR mode **300.** Across the top of the default AR video view mode is an incoming message panel **350** that pops up an incoming message from other user/peer **32** or the command centre to the user **30.** When a user wears a vest with a health monitor and battery power sensor, health conditions of the user (such as, body temperature **391,** health state **392** (like, tired, exhausted, heat stroke, etc.) and electric power level **393** may be displayed in a health and supplies panel **390** located on the right hand side of the AR view mode. Preferably, when a view mode button/icon is active, its colour toggles, for eg. to grey.

In the default AR view mode **300,** the camera **220** can be activated to take **1220** video or photo **310** by activating the camera icon **331** or button **240** on the projection body **210.** With a photo taken, the user can activate the touch pad/track point **145,** move a highlight box to select a target or OoI **310,** click within the highlight box to attach **1312** a tag or icon **312.** Alternatively, the entire photo **310** can be tagged. If the user takes no action after capturing a photo, the view mode reverts to the default AR video mode after a lapse of a predetermined time, such as about 10 s; alternatively, when the user does not need to tag a target or OoI, the user can click on a cancel button on the touch pad **145** to switch immediately to the default AR video mode. If the touch pad is still active, the predetermined view mode toggling will not take place and the user can continue tagging other targets or OoIs. The predetermined view mode toggle will occur when the AR display system detects inactivity from the user. The videos, photos and tagged photos **310** are sent to the command centre **20** for recording and analyzing.

In dim light situation or night time, the user **30** can activate the camera **220** and thermal camera **230** for assisted night vision. As in the default video view mode, the man-identification algorithm **116** automatically helps to identify and to mark/highlight a human face **310** in the field of vision to lessen visual cognitive load on the user.

FIG. 4B shows a turret view **301** when a forward equipment **103** (such as a camera, remote detectors, etc.) of an UGV **103a,** UAV/drone **103b** or UUV **103c** is deployed in the frontline ahead of the user. When the turret button/icon **333** is activated, the forward equipment is automatically paired with the modular AR display system **100,100a,100b.** When pairing is not successful, the user has the option to reconnect the pairing; if the pairing fails, the user or command centre is notified. In the turret view **301,** a sighting cross-hair **360** appears in the centre of the video streamed from the forward equipment (or camera/detector) mounted on the unmanned vehicle **103.** Pan and tilt movements of the forward equipment's turret directions are controlled by outputs of the 9-axis IMU **135** by moving the head of the user in realtime (ie. requiring substantially continuous, manual inputs to actuators and sensors in the forward equipment). Alternatively, gesture control and/or brain sensory control may be used to control movements of the forward equipment **103** in an autonomous mode, thereby allowing heads-up, eyes-out and hands-on readiness. A multi-modal controller **400** in association with control of the drone **103b** will be described in a later section.

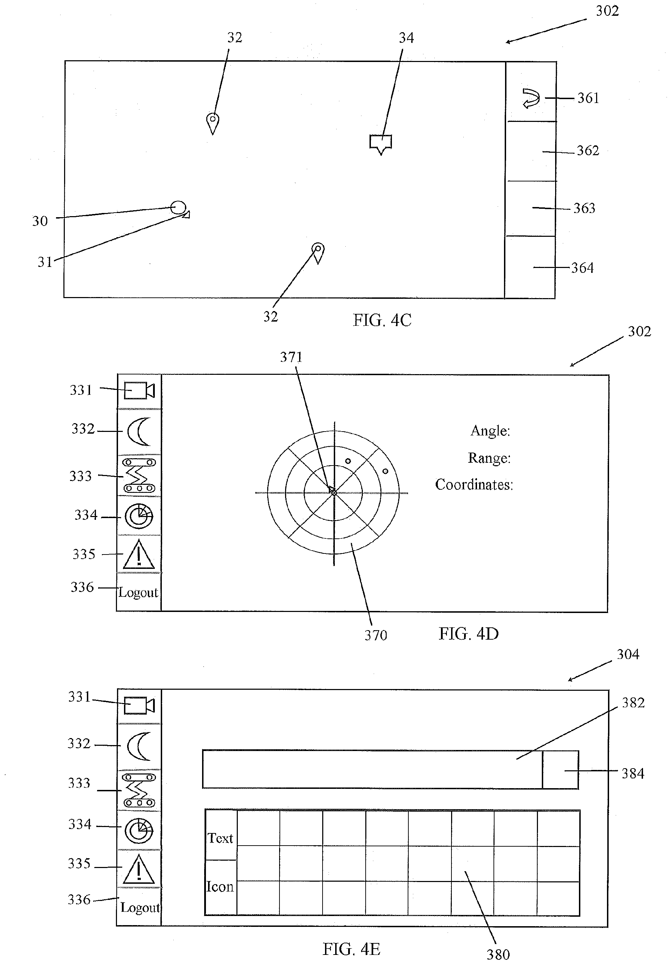

Clicking on the mimimised GPS map **320** brings up the full GPS map view in a new view. FIG. 4C shows the full GPS map view **302.** In the GPS map view, the user **30** is identified by a circle with an apex of a triangle **31** indicating the direction the user is facing as enabled by the GPS unit **140** and 9-axis IMU **135.** For eg., peers or friends **32** are identified by water-drop location pin, whilst foes **34** are identified by quadrilateral speech location pin. On the right hand edge are 4 buttons **361, 362, 363, 364,** respectively for returning to the default view mode, for zooming in, zooming out and refreshing the GPS map. A user can tap on the peer location pin to send **1380** a message (text, icon, photo or video). On taping a peer location, a keypad (such as that shown in FIG. 4E) appears for the user to enter and send the message. Refreshing updates location of the tagged, peer/friends and foes locations from the last viewing position (instead of refreshing from the user's location).

When a user enters an indoor area, GPS communication is lost and the user is directed to an indoor navigation mode. From the last known GPS coordinates and direction, the pedometer **130** provides the user with the distances moved, even by the rates of movements, whilst the 9-axis IMU **135** provides the directional changes and the barometer **125** provides the ascending and descending distances.

FIG. 4D shows a third party support device view mode **303.** The third party support device may be a laser finder **101** or an ATS **102.** With the use of the ATS, a clock face **370** visually shows positions of the targets or OoI **310,** with concentric circles indicating distances from the user and an apex of a triangle **371** at the centre shows the direction the user is facing. The user has the option to tag **312** a target location within the predetermined view mode toggle time. These known target locations and tags are automatically planted on the GPS map **320** and are made available to other users/peers **32** and the command centre **20.**

Preferably, after tagging a target or OoI **310** position, the modular AR display system **100,100a,100b** automatically switches to the photo taking view mode. The AR display system switches over to the default AR video mode **300** after the predetermined time or the user has the option to cancel the photo taking view mode to immediately switch to the default AR video view mode.

FIG. 4E shows an emergency view mode **304** of the user interface for communicating with the command centre **20.** In the emergency view mode **304,** text and/or icons are selected from a keypad **380** to compose **1380** messages in an input view panel **382.** The message is sent by activating a send button **384.** In addition, the camera **220** can be activated to provide live video of the frontline surrounding. In the situation when the user **30** requires assistance or attention, the camera **220** can also be programmed to provide live video stream to the command centre **20.**

Communication with other users/peers, with the forward equipment, with the third party support devices and with the command centre may be via secure wireless connection. As described above, the incoming message panel **350** pops up at the top of the default AR video view mode **300.** There is a tick button **352** near the incoming message panel **350** for the user to acknowledge receipt; if no acknowledgement is made, the incoming message panel **350** fades away after a predetermined time, such as about 15 s. The incoming message panel disappears immediately after acknowledging receipt. To send a message to a peer/friend, the user clicks on the GPS map **320** and clicks on the relevant position icon representing the peer/friend and a message panel similar to that in FIG. 4E appears.

Now, the modular heads-up display system **100,100a,100b** is described to bring out more clearly each of the various functionalities: (1): Feeding of intuitive AR information to users **30, 32** to help improve situation awareness and to allow better decision making. The user interfaces help in minimizing the cognitive load on the users so as to lessen the burden on the users in making a decision by providing AR information in an intuitive manner and to lessen the demand on them to capture and to send information at the frontline to other users/peers and command centre. In addition, various view modes in the user interface allow the users to quickly switch to the various functionalities, such as:
(a) Default AR view **300** - allows users to see through the spectacle in the eyes-out and heads-up concepts with constant view of the real surrounding and stay vigilant, with hands-on trigger readiness for action whilst receiving AR information for decision making;
(b) Night vision button **332** - allows users to use the heads-up display system in dim light environment;
(c) Forward equipment **103** interaction **333** with man-identification algorithm **116** for identifying humans in videos of forward (or frontline) surrounding some distances away from the users;
(d) Tagging **1312** of humans identified as peers/friends or foes in videos of frontline surrounding;
(e) GPS map view **302** - allows users to appraise frontline surrounding by using location maps through GPS and to help in user navigation and communication with peers/friends **32;**
(f) Interface with third party support devices (such as, ATS and laser finders) to trace and to locate hostile or target **34** locations on the GPS map;
(g) messaging interface **304** - allows users to communicate and coordinate with other users/peers in the frontline and with the command centre; and
(h) Emergency hotkey **335** - for contacting or alerting the command centre during an emergency.

(2) Identification for danger sensing (in the default AR video view mode):
   (a) with the man-identification algorithm **116,** automatically detects and identifies a human face from the video of the frontline surrounding and to mark/highlight the detected human whether they are friends/peers **32** or foes (targets) **34;**
   (b) from this video view mode, users can activate the camera/video **220** button to take photos or videos of the frontline environment to assist other users and the command centre;
   (c) users can activate third party support devices (such as, a laser finder **101** to fire at target positions for automatic planting of target locations/coordinates onto the GPS map **320** so that AR information can be shared with other users and the command centre; and
   (d) turns **1332** on the night vision when the surrounding is dim.
(3) GPS map view mode **302** allows:
   (a) automatic identification of locations of user and peers/friends **32** in the frontline. This visual broad view of the frontline surrounding lessens the cognitive load on the user; and
   (b) targets/foes **34** locations identified through third party support devices are also automatically planted on the GPS map, thus helping the user to navigate in the field and to communicate with other users/peers and with the command centre.
(4) Digital tagging of Ool for identification and tracking:
   (a) tagging **1312** allows digitally labeling of targets **310** onto videos or photos captured with the camera/video function;
   (b) tagged information can be in the form of text message or represented by icons or logos **312;**
   (c) tagged information is reflected in the GPS maps for sharing with other users and command centre; and
   (d) instructions and messages from the command centre are received and read by each user in the incoming message panel **350** that is prominently shown across the top of the AR view.
(5) Forward equipment **103** interaction:
   (a) the forward equipment includes camera/video mounted on or detectors sent by unmanned vehicle **103a, 103b, 103c** deployed ahead of the user;
   (b) with outputs from the 9-axis IMU **135,** users can control movement of the unmanned vehicle **103,** for eg., by realtime panning and tilting turrets of the forward equipment; or using a multi-modal controller **400** for autonomous control of a drone or UAV **103b;**
   (c) the camera **220** provides live video streams of the frontline surrounding to assist other users and the command centre; and
   (d) planting and activating remote detectors to assist in user navigation.
(6) Interface with third party support devices to trace/locate and identify hostile or targets:
   (a) the clock face display **370** provides visual information, such as, the angle, range and position of friends/peers **32** and foes/targets **34** at the frontline. Positions of foes can be traced from detecting hostile gunfires using third party devices like the ATS **102;** and
   (b) with the help of laser finders **101,** users can locate foes/targets coordinates and these locations are planted onto the GPS maps **320.**
(7) Communication and coordination with the command centre: Users at the frontline may not have a complete view of the surrounding, for eg. due to nature of terrain and structural obstruction, thereby needing support from the command centre, in the form of non-verbal and non-line of sight information of strategic place-of-interest (PoI) or certain Gals:
   (a) The command centre receives information from other users at the frontline and can thus disseminate information (such as, messages (text or icons) and AR photos/videos to users for better coordination;
   (b) users are also able to send messages (text or icons) and photos/videos to the command centre and other users for sharing information and communicating with one another;
   (c) information history is tracked by time stamping as frontline situations are fast changing; and
   (d) the hotkey **335** for emergency contact with the command centre is provided as a button on the left hand edge of the default AR view. The hotkey allows users to seek quick assistance and attention from the command centre.
(8) AR heads-up display on host spectacles: The host eyewear **10** is preferably a ballistic protection spectacle, such as those conforming to US military requirements. This modular heads-up display system **100,100a,100b** provides up-to-date information to users at the frontline for making mission-critical, time-critical or safety-critical decisions and coordinating with each other and with the command centre.
(9) Modular add-on functionalities to host spectacle: The modular heads-up display system **100, 100a** thus extends the functionalities of the host spectacle **10** by removeable snapping on the three modules **110, 170, 180** onto the host spectacle. Users have a choice of right- and left-hand configurations. The display or projection module **200** is pivotable between an extended position and a retracted position; at the retracted position, the projection module is out of the line of sight through the host spectacle and this gives the user full reality view (or un-obstructed view) of the frontline. In addition, the lengths of the battery and processor modules are kept small, for eg, within substantially 65 mm so that even when the heads-up display system **100, 100a** is attached onto the host spectacle, the temple pieces can be folded and the spectacle can be kept away when not in use.
(10) Health monitor and electric power sensor. When the user wears a vest with health monitoring, the user is made aware of the state of health (such as body temperature **391**) and be warned of any unhealthy symptoms **392** via the health monitor and supplies panel **390;** when the vest is also equipped with battery power sensing, the user can check the battery power level **393,** even before setting out on a task.

Typically, a drone **103b** requires more complex controls from a user; generally, a conventional drone controller also requires both hands of a user to operate when navigating the drone. In the following description, the multimodal controller **400** is now described for use to control a drone **103b,** which is deployed as a forward equipment **103** in the frontline. The multimodal controller **400** includes a command integration unit **410** and a command priority weighting unit **414.** In the present invention, the users are often called to execute mission-critical, time-critical or safety-critical tasks; the multimodal controller **400** thus allows a user natural, intuitive and autonomous control of a drone, yet allowing the user to stay vigilant with heads-up, eyes-out and hands-on trigger readiness (with the drone control not requiring both hands to operate); at the same time, with AR information being presented to the user or made available to the user, this heads-up AR system **100,100a,100b** enhances the user's task effectiveness and efficiency. In addition, the multimodal controller **400** adapts to the user (instead of the user having to adapt to the controller, as the case for the conventional drone controller).

The command integration unit **410** fuses three control modes, namely, voice, gesture and brain signals **420,430,440** to generate an autonomous command signal; in response, the drone executes the autonomous command signal and incrementally updates its state; for eg., by executing a "turn" autonomous command signal, the drone navigates a predetermined distance in an azimuth direction from a present position. In another eg., by executing an "up" autonomous command signal, the drone moves up a predetermined altitude from its present position. With this autonomous control, during a critical moment, a user can continue to hold a weapon with both hands, with eyes-out and staying vigilant whilst navigating the drone. This autonomous control with predetermined motion and direction is distinguished from the realtime control provided by outputs from the IMU **135.** Further, the user has a choice of initiating a voice control **1420** (where a certain degree of sound is acceptable), gesture control **1430** (using hand signals or inertia of a wearable device) or brain sensory control **1440** (during silent watch). Each of these three controls has respective characteristics of response time, accuracy and sensitivity, and they augment each other (instead of creating redundancies). In this way, the command integration unit-**410** is driven by a dominant control mode in one particular state according to its characteristic response time, accuracy, sensitivity and environment compatibility, thereby dispensing with any need for command error correction. This also prevents commands from two different modes being treated as two distinct commands, which would result in unwanted movements of the drone, for eg., when the beginning part of a command stream from a mode with short response/process time catches an ending part of a command stream with longer response/process time. In one embodiment, the command integration unit **410** operates on a rule-based mechanism (for eg., by comparing a current state of the drone with the state of the drone when command signals were received).

In addition, sensitivities of the different input modes of control are different; for eg., some input modes are error-prone to the environment, such as, noise level and lighting condition, whilst other modes are subject to mental distractions. The command priority weighting unit **414** determines the most appropriate command generated from the three control modes.

In the multimodal controller, priority weighting unit **414** is given to the control mode which gives the highest sensitivity under a particular environment. For eg., in an environment where brightness is low, gesture control **1430** will be given low weightage in generating the command signal. However, the user can over-ride the command mode. A reason for giving the user this authority is because the user is often able to assess the most suitable control mode in a given environment. For eg., the user can switch to use brain sensory control **1440** for commanding the drone in an environment where voice control **1420** was given the highest priority where a noisy environment could cause a false signal to mix in.

While specific embodiments have been described and illustrated, it is understood that many changes, modifications, variations and combinations thereof could be made to the present invention without departing from the scope of the invention, which is defined in the appended claims. For eg., the electronic processing unit includes encryption and decryption algorithms which allow secure coding and decoding of messages and communication. In another eg., a consumer can use the above heads-up display system **100,100a,100b** to improve productivity when conducting a training during which information is provided to the trainer in the AR form; this can also be used during a test or training simulation, or by a pilot, driver or rider when navigating a vehicle, be it aerial, ground or underwater.

## Claims

1. A modular heads-up augmented reality (AR) display system (100,100a,100b) wearable by a user in a rescue or combat mission comprising:
a processor module (110);
a battery module (170);
a trunking module (180) disposed between the processor module (110) and the battery module (170) to protect wires connecting the processor module (110) and the battery module (170); and
a host spectacle (10) having two temple pieces (11a,11b) and a front frame (12);
**characterised in that**:
the processor and the battery modules (110,170) are removeably attachable with a hook (111,171) onto the respective separate temple pieces (11a,11b), whilst the trunking module (180) is removeably attachable onto the front frame (12) of the host spectacle (10); and
a forward distal end of the processor module (110) is pivotably connected to a display or projection unit (200) by a drop-in slot connector (160), so that the display/projection unit (200) is pivotable about one axis and is adjustable between an extended position (for AR view) and a retracted position (for full reality view), thereby allowing the user to stay vigilant during a mission-critical, time-critical or safety-critical situation.

2. A modular heads-up augmented reality (AR) display system (100,100a.100b) wearable by a user in a rescue or combat mission comprising:
a processor module (110);
a battery module (170a); and
a trunking module (180) disposed between the processor module (110) and the battery modules (170a) to protect wires connecting the processor module (110) and the battery modules (170a);
**characterised in that**:
a helmet (15) with a Picatinny rail (17) disposed on both exterior sides of the helmet (15) for mounting the processor module (110) and the battery module (170a); and
a forward distal end of the processor module (110) is pivotably connected to a display or projection unit (200a) by a drop-in slot connector (160), so that the display/projection unit (200a) is pivotable about one axis and is adjustable between an extended position (for AR view) and a retracted position (for full reality view), thereby allowing the user to stay vigilant during a mission-critical, time-critical or safety-critical situation.

3. The AR heads-up display system (100,100a,100b) according to claim 1 or 2, wherein the processor module (110) comprises an electronic processing unit (115), a barometer (125), a pedometer (130), a nine-axis inertia measuring unit (IMU) (135), a GPS unit (140), a wireless unit, a touch pad/track point (145) and some select buttons (150).

4. The AR heads-up display system (100,100a,100b) according to claim 3, wherein the barometer (125), the pedometer (130) and the IMU (135) are housed in a separate wearable unit.

5. The AR heads-up display system (100,100a,100b) according to claim any one of the preceding claims, wherein the projection module (200) comprises a body member (210) and a transparent prism member (260), with the transparent prism member (260) having an internal reflection surface on which a projection image is formed, and the body member (210) comprises a micro-display unit (215), a camera/video unit (220), a light sensor (225) and a thermal camera (230).

6. The AR heads-up display system (100,100a,100b) according to any one of claims 1 or 3-5-, wherein the host spectacle (10) is foldable with the AR head-up display system attached thereon.

7. The AR heads-up display system (100,100a,100b) according to any one of claims 3-6, wherein the electronic processing unit (115) comprises:
a man-identification algorithm (116) for detecting a humanoid face (310) when viewing through the camera/video unit (220) and
a tagging algorithm (118) to allow a user to tag (1312) a detected humanoid face (310), any obj ect-of interest (OoI), place-of interest (PoI) or target (310).

8. The AR heads-up display system (100,100a,100b) according to any one of the preceding claims is configured to connect wirelessly with a third party support device (101), which comprises:
(a) a forward equipment (103) having a camera/video or remote detector mounted on an unmanned vehicle deployed ahead of a user;
(b) a laser finder (101) for obtaining a distance and coordinates of a target position, and planting the target position onto a GPS map;
(c) an acoustic targeting system (ATS) (102) for detecting a hostile target position and planting the target position onto a GPS map; and
(d) a health monitor and battery power sensor, which are disposed in a vest worn by the user.

9. The AR heads-up display system (100,100a,100b) according to any one of claims 3-8, wherein the electronic processing unit (115) generates a user interface showing at least the following view modes:
(a) default video AR view mode (300);
(b) night vision view mode (332);
(c) a forward equipment control (333) of a forward unmanned vehicle;
(d) a GPS map view mode (302);
(e) an acoustic targeting system (ATS) (102) view mode;
(f) an emergency hotkey messaging view mode (304); and
(g) user's health conditions and supplies/battery power supply level (390).

10. The AR heads-up display system (100,100a,100b) according to any one of claims 3-9, wherein electronic processing unit (115) allows outdoor navigation via GPS (320), and indoor navigation via the last GPS position and direction by a horizontal distance moved and rate of horizontal movement via the pedometer (130), by an ascent or descent distance moved via the barometer (125), and by directional changes via the IMU (135).

11. The AR heads-up display system (100,100a,100b) according to claim 10, wherein an emergency user situation is detected by lack of motion within a predetermined time period from the last know GPS coordinates or outputs from the pedometer (130), barometer (125) or IMU (135) and the emergency user situation is operable to switch to the default video mode to send live video of the surrounding to a command centre (20) (in an emergency situation).

12. The AR heads-up display system (100,100a,100b) according to claim 8, wherein the unmanned vehicle (103a,103b,103c) is a drone and a multi-modal controller (400), with the multi-modal controller comprising a command integration unit (410) and a command priority weighting unit (414) to allow the user to command the drone via voice control, gesture control or brain sensory control.

13. The AR heads-up display system (100,100a,100b) according to claim 9, wherein the night vision view (332) activates both the camera unit (220) and the thermal camera (230), and an image fusion algorithm (232) corrects the outputs of both the camera unit and the thermal camera, and provides a thermal image with defined or enhanced outlines to assist the user with low light condition.

## Patentansprüche

1. Ein modulares, tragbares Augmented Reality (AR) Heads-Up Display-System (100, 100a, 100b) für den Einsatz durch einen Benutzer in einer Rettungs- oder Kampfeinsatzmission, umfassend:
ein Prozessormodul (110);
ein Batteriemodul (170);
ein Trunking-Modul (180), das zwischen dem Prozessormodul (110) und dem Batteriemodul (170) angeordnet ist, um die Kabel zu schützen, die das Prozessormodul (110) und das Batteriemodul (170) verbinden; und
eine Halterungsbrille (10) mit zwei Bügelstücken (11a, 11b) und einem Frontrahmen (12);
**dadurch gekennzeichnet, dass**:
das Prozessormodul und das Batteriemodul (110, 170) abnehmbar mit einem Haken (111, 171) an den jeweiligen separaten Bügelstücken (11a, 11b) befestigt werden können, während das Trunking-Modul (180) abnehmbar am Frontrahmen (12) der Halterungsbrille (10) befestigt werden kann; und
ein vorderes, distales Ende des Prozessormoduls (110) schwenkbar über einen Drop-In-Slot-Anschluss (160) mit einer Anzeige- oder Projektionseinheit (200) verbunden ist, sodass die Anzeige-/Projektionseinheit (200) um eine Achse schwenkbar ist und zwischen einer ausgefahrenen Position (für AR-Ansicht) und einer zurückgezogenen Position (für volle Realitätssicht) verstellbar ist, wodurch der Benutzer während einer missionskritischen, zeitkritischen oder sicherheitskritischen Situation wachsam bleiben kann.

2. Ein modulares, tragbares Augmented Reality (AR) Heads-Up Display-System (100, 100a, 100b) für den Einsatz durch einen Benutzer in einer Rettungs- oder Kampfeinsatzmission, umfassend:
ein Prozessormodul (110);
ein Batteriemodul (170a); und
ein Trunking-Modul (180), das zwischen dem Prozessormodul (110) und den Batteriemodulen (170a) angeordnet ist, um die Kabel zu schützen, die das Prozessormodul (110) und die Batteriemodule (170a) verbinden;
**dadurch gekennzeichnet, dass**:
ein Helm (15) mit einer Picatinny-Schiene (17) auf beiden Außenseiten des Helms (15) angeordnet ist, um das Prozessormodul (110) und das Batteriemodul (170a) zu montieren; und
ein vorderes, distales Ende des Prozessormoduls (110) schwenkbar über einen Drop-In-Slot-Anschluss (160) mit einer Anzeige- oder Projektionseinheit (200a) verbunden ist, sodass die Anzeige-/Projektionseinheit (200a) um eine Achse schwenkbar ist und zwischen einer ausgefahrenen Position (für AR-Ansicht) und einer zurückgezogenen Position (für volle Realitätssicht) verstellbar ist, wodurch der Benutzer während einer missionskritischen, zeitkritischen oder sicherheitskritischen Situation wachsam bleiben kann.

3. Das AR Heads-Up Display-System (100, 100a, 100b) nach Anspruch 1 oder 2, wobei das Prozessormodul (110) eine elektronische Verarbeitungseinheit (115), ein Barometer (125), einen Schrittzähler (130), eine Neun-Achsen-Inertialmesseinheit (IMU) (135), eine GPS-Einheit (140), eine drahtlose Einheit, ein Touchpad/Trackpoint (145) und einige Auswahltasten (150) umfasst.

4. Das AR Heads-Up Display-System (100, 100a, 100b) nach Anspruch 3, wobei das Barometer (125), der Schrittzähler (130) und die IMU (135) in einer separaten tragbaren Einheit untergebracht sind.

5. Das AR Heads-Up Display-System (100, 100a, 100b) nach einem der vorhergehenden Ansprüche, wobei das Projektionsmodul (200) ein Gehäuseteil (210) und ein transparentes Prismenteil (260) umfasst, wobei das transparente Prismenteil (260) eine interne Reflexionsfläche aufweist, auf der ein Projektionsbild erzeugt wird, und das Gehäuseteil (210) eine Mikrodisplayeinheit (215), eine Kamera-/Videoeinheit (220), einen Lichtsensor (225) und eine Wärmebildkamera (230) umfasst.

6. Das AR Heads-Up Display-System (100, 100a, 100b) nach einem der Ansprüche 1 oder 3 bis 5, wobei die Halterungsbrille (10) faltbar ist, wobei das AR Heads-Up Display-System darauf befestigt ist.

7. Das AR Heads-Up Display-System (100, 100a, 100b) nach einem der Ansprüche 3 bis 6, wobei die elektronische Verarbeitungseinheit (115) umfasst:
einen Menschenerkennungsalgorithmus (116) zum Erkennen eines humanoiden Gesichts (310) beim Betrachten durch die Kamera-/Videoeinheit (220); und
einen Tagging-Algorithmus (118), der es dem Benutzer ermöglicht, ein erkanntes humanoides Gesicht (310), ein beliebiges Objekt von Interesse (OoI), einen Ort von Interesse (Pol) oder ein Ziel (310) zu markieren.

8. Das AR Heads-Up Display-System (100, 100a, 100b) nach einem der vorhergehenden Ansprüche ist konfiguriert, sich drahtlos mit einem Drittanbieter-Supportgerät (101) zu verbinden, das umfasst:
(a) ein Frontgerät (103), das eine Kamera/Video- oder Ferndetektionseinheit auf einem unbemannten Fahrzeug umfasst, das vor dem Benutzer eingesetzt wird;
(b) einen Laser-Entfernungsmesser (101) zur Ermittlung einer Entfernung und der Koordinaten einer Zielposition und zum Eintragen der Zielposition auf eine GPS-Karte;
(c) ein akustisches Zielsystem (ATS) (102) zur Erkennung einer feindlichen Zielposition und zum Eintragen der Zielposition auf eine GPS-Karte; und
(d) einen Gesundheitsmonitor und einen Batteriesensor, die in einer Weste untergebracht sind, die vom Benutzer getragen wird.

9. Das AR Heads-Up Display-System (100, 100a, 100b) nach einem der Ansprüche 3 bis 8, wobei die elektronische Verarbeitungseinheit (115) eine Benutzeroberfläche generiert, die mindestens die folgenden Ansichtsmodi anzeigt:
(a) Standard-Video-AR-Ansichtsmodus (300);
(b) Nachtsicht-Ansichtsmodus (332);
(c) Steuerung (333) eines unbemannten Fahrzeugs;
(d) GPS-Kartenansichtsmodus (302);
(e) akustisches Zielsystem (ATS) (102) Ansichtsmodus;
(f) Notfall-Hotkey-Nachrichtenansichtsmodus (304); und
(g) Gesundheitszustand des Benutzers und Versorgung/Batterieversorgung (390).

10. Das AR Heads-Up Display-System (100, 100a, 100b) nach einem der Ansprüche 3 bis 9, wobei die elektronische Verarbeitungseinheit (115) eine Outdoor-Navigation über GPS (320) ermöglicht, und eine Indoor-Navigation über die letzte GPS-Position und die Richtung durch eine horizontale Distanzmessung und die Geschwindigkeit der horizontalen Bewegung über den Schrittzähler (130), eine Auf- oder Abwärtsbewegung über das Barometer (125), und Richtungsänderungen über die IMU (135) ermöglicht.

11. Das AR Heads-Up Display-System (100, 100a, 100b) nach Anspruch 10, wobei eine Notfallsituation des Benutzers durch Bewegungsmangel innerhalb eines vorgegebenen Zeitraums ab den letzten bekannten GPS-Koordinaten oder durch Ausgaben des Schrittzählers (130), des Barometers (125) oder der IMU (135) erkannt wird und die Notfallsituation so konfiguriert ist, dass sie in den Standard-Video-Modus wechselt, um Live-Video der Umgebung an ein Kommandozentrum (20) zu senden (in einer Notfallsituation).

12. Das AR Heads-Up Display-System (100, 100a, 100b) nach Anspruch 8, wobei das unbemannte Fahrzeug (103a, 103b, 103c) eine Drohne ist und ein multimodaler Controller (400) mit einer Befehlsintegrations-Einheit (410) und einer Prioritätsbewertungseinheit (414) umfasst, der es dem Benutzer ermöglicht, die Drohne über Sprachsteuerung, Gestensteuerung oder Gehirnsensorik zu steuern.

13. Das AR Heads-Up Display-System (100, 100a, 100b) nach Anspruch 9, wobei der Nachtsichtmodus (332) sowohl die Kameraeinheit (220) als auch die Wärmebildkamera (230) aktiviert, und ein Bildfusion-Algorithmus (232) die Ausgaben sowohl der Kameraeinheit als auch der Wärmebildkamera korrigiert und ein Wärmebild mit definierten oder verbesserten Konturen bereitstellt, um dem Benutzer bei schlechten Lichtverhältnissen zu helfen.

## Revendications

1. Un système d'affichage modulaire en réalité augmentée (AR) (100, 100a, 100b) portable par un utilisateur dans une mission de sauvetage ou de combat comprenant :
un module processeur (110) ;
un module batterie (170) ;
un module de cheminement (180) disposé entre le module processeur (110) et le module batterie (170) pour protéger les fils reliant le module processeur (110) et le module batterie (170) ; et
une monture de lunettes (10) comprenant deux branches (11a, 11b) et un cadre avant (12) ;
**caractérisé en ce que** :
les modules processeur et batterie (110, 170) peuvent être fixés de manière amovible avec un crochet (111, 171) sur les branches séparées respectives (11a, 11b), tandis que le module de cheminement (180) peut être fixé de manière amovible sur le cadre avant (12) de la monture de lunettes (10) ; et une extrémité distale avant du module processeur (110) est reliée pivotante à une unité d'affichage ou
de projection (200) par un connecteur à encoche (160), de sorte que l'unité d'affichage/projection (200) puisse pivoter autour d'un axe et être réglée entre une position déployée (pour la vue AR) et une position rétractée (pour la vue en réalité complète), permettant ainsi à l'utilisateur de rester vigilant lors d'une situation critique en termes de mission, de temps ou de sécurité.

2. Un système d'affichage modulaire en réalité augmentée (AR) (100, 100a, 100b) portable par un utilisateur dans une mission de sauvetage ou de combat comprenant :
un module processeur (110) ;
un module batterie (170a) ; et
un module de cheminement (180) disposé entre le module processeur (110) et les modules batterie (170a) pour protéger les fils reliant le module processeur (110) et les modules batterie (170a) ;
**caractérisé en ce que** :
un casque (15) avec un rail Picatinny (17) est disposé sur les deux côtés extérieurs du casque (15) pour monter le module processeur (110) et le module batterie (170a) ; et
une extrémité distale avant du module processeur (110) est reliée pivotante à une unité d'affichage ou de projection (200a) par un connecteur à encoche (160), de sorte que l'unité d'affichage/projection (200a) puisse pivoter autour d'un axe et être réglée entre une position déployée (pour la vue AR) et une position rétractée (pour la vue en réalité complète), permettant ainsi à l'utilisateur de rester vigilant lors d'une situation critique en termes de mission, de temps ou de sécurité.

3. Le système d'affichage AR Heads-Up (100, 100a, 100b) selon la revendication 1 ou 2, dans lequel le module processeur (110) comprend une unité de traitement électronique (115), un baromètre (125), un podomètre (130), une unité de mesure inertielle à neuf axes (IMU) (135), une unité GPS (140), une unité sans fil, un pavé tactile/trackpoint (145) et quelques boutons de sélection (150).

4. Le système d'affichage AR Heads-Up (100, 100a, 100b) selon la revendication 3, dans lequel le baromètre (125), le podomètre (130) et l'IMU (135) sont logés dans une unité portable distincte.

5. Le système d'affichage AR Heads-Up (100, 100a, 100b) selon l'une quelconque des revendications précédentes, dans lequel le module de projection (200) comprend un élément de corps (210) et un élément prismatique transparent (260), l'élément prismatique transparent (260) ayant une surface de réflexion interne sur laquelle une image de projection est formée, et l'élément de corps (210) comprend une unité micro-affichage (215), une unité caméra/vidéo (220), un capteur de lumière (225) et une caméra thermique (230).

6. Le système d'affichage AR Heads-Up (100, 100a, 100b) selon l'une quelconque des revendications 1 ou 3-5, dans lequel la monture de lunettes (10) est pliable avec le système d'affichage AR Heads-Up fixé dessus.

7. Le système d'affichage AR Heads-Up (100, 100a, 100b) selon l'une quelconque des revendications 3-6, dans lequel l'unité de traitement électronique (115) comprend :
un algorithme de détection d'humanoïde (116) pour détecter un visage humanoïde (310) lors de la visualisation via l'unité caméra/vidéo (220) ; et
un algorithme de balisage (118) permettant à un utilisateur de baliser un visage humanoïde détecté (310), tout objet d'intérêt (OoI), lieu d'intérêt (Pol) ou cible (310).

8. Le système d'affichage AR Heads-Up (100, 100a, 100b) selon l'une quelconque des revendications précédentes est configuré pour se connecter sans fil à un dispositif de support tiers (101), qui comprend : (a) un équipement avancé (103) ayant une caméra/vidéo ou un détecteur à distance monté sur un véhicule sans pilote déployé devant un utilisateur ; (b) un télémètre laser (101) pour obtenir une distance et les coordonnées d'une position cible, et planter la position cible sur une carte GPS ; (c) un système de ciblage acoustique (ATS) (102) pour détecter une position cible hostile et planter la position cible sur une carte GPS ; et (d) un moniteur de santé et un capteur de puissance de la batterie, qui sont disposés dans un gilet porté par l'utilisateur.

9. Le système d'affichage AR Heads-Up (100, 100a, 100b) selon l'une quelconque des revendications 3-8, dans lequel l'unité de traitement électronique (115) génère une interface utilisateur affichant au moins les modes de vue suivants : (a) mode de vue AR vidéo par défaut (300) ; (b) mode de vue en vision nocturne (332) ; (c) contrôle de l'équipement avancé (333) d'un véhicule sans pilote avancé ; (d) mode de vue carte GPS (302) ; (e) mode de vue du système de ciblage acoustique (ATS) (102) ; (f) mode de vue de messagerie d'urgence via une touche de raccourci (304) ; et (g) conditions de santé de l'utilisateur et niveau d'alimentation en batterie/approvisionnements (390).

10. Le système d'affichage AR Heads-Up (100, 100a, 100b) selon l'une quelconque des revendications 3-9, dans lequel l'unité de traitement électronique (115) permet la navigation en extérieur via GPS (320), et la navigation en intérieur via la dernière position GPS et la direction par une distance horizontale parcourue et le taux de mouvement horizontal via le podomètre (130), par une distance ascendante ou descendante parcourue via le baromètre (125), et par des changements de direction via l'IMU (135).

11. Le système d'affichage AR Heads-Up (100, 100a, 100b) selon la revendication 10, dans lequel une situation d'urgence utilisateur est détectée par absence de mouvement dans un délai prédéterminé depuis les dernières coordonnées GPS connues ou les sorties du podomètre (130), du baromètre (125) ou de l'IMU (135) et la situation d'urgence utilisateur est opérationnelle pour passer en mode vidéo par défaut afin d'envoyer une vidéo en direct de l'environnement à un centre de commandement (20) (en situation d'urgence).

12. Le système d'affichage AR Heads-Up (100, 100a, 100b) selon la revendication 8, dans lequel le véhicule sans pilote (103a, 103b, 103c) est un drone et un contrôleur multimodal (400), le contrôleur multimodal comprenant une unité d'intégration de commande (410) et une unité de pondération de priorité de commande (414) pour permettre à l'utilisateur de commander le drone via le contrôle vocal, le contrôle gestuel ou le contrôle par capteur cérébral.

13. Le système d'affichage AR Heads-Up (100, 100a, 100b) selon la revendication 9, dans lequel la vision nocturne (332) active à la fois l'unité caméra (220) et la caméra thermique (230), et un algorithme de fusion d'images (232) corrige les sorties des deux unités caméra et thermique, et fournit une image thermique avec des contours définis ou améliorés pour aider l'utilisateur dans des conditions de faible luminosité.
